# FASCICULE DE BREVET EUROPEEN

(11) **EP 1 433 968 B1**
(45) Date de publication et mention de la délivrance du brevet: **01.06.2005**
(21) Numéro de dépôt: 03293056.2
(22) Date de dépôt: 08.12.2003
(51) Int. Cl.: F16C 19/52, F16C 33/30

(54) **Palier à roulement freiné compact**
Kompaktes Wälzlager mit Bremseinrichtung
Compact locked antifriction roller bearing

(30) Priorité: 17.12.2002 FR 0216022
(43) Date de publication de la demande: 30.06.2004
(73) Titulaire: Aktiebolaget SKF, S-415 50 Göteborg (SE)
(72) Inventeur: Landrieve, Franck, 37230 Fondettes (FR)
(74) Mandataire: Dossmann, Gérard

(56) Documents cités:
- DE-A- 19 829 239
- FR-A- 2 804 479
- FR-A- 2 810 088
- FR-A- 2 816 047

## Description

La présente invention concerne le domaine des ensembles instrumentés du genre pour volants de manoeuvre utilisés par exemple pour la direction de véhicules automobiles, d'engins de manutention ou d'engins de travaux publics, ou de tous autres types d'engins ou de machines nécessitant un volant de commande.

De façon classique, un volant de commande est relié à un axe, par exemple un axe de colonne de direction, qui, suivant le type de direction utilisé, actionne directement en rotation le mécanisme de direction dans le cas d'une direction mécanique, actionne des distributeurs de pression hydraulique dans le cas d'une direction hydraulique ou, enfin, dans le cas d'une direction électrique, actionne l'anneau codeur d'un dispositif de capteur délivrant un signal au moteur électrique de commande, diverses combinaisons de ces types étant possibles.

Dans le cas d'une direction uniquement électrique, de plus en plus couramment utilisée pour des engins de manutention tels que des chariots élévateurs, un système de détection de la rotation du volant, intégré ou non aux roulements, délivre par un câble un signal représentatif de la rotation du volant à destination du dispositif d'orientation des roues du véhicule. Le volant étant monté sur son support par un ou plusieurs paliers à roulement et n'étant pas lié à des systèmes mécaniques de transmission de couple, la rotation du volant s'effectue avec un couple résistant extrêmement faible. On y ajoute donc souvent un système de freinage du volant destiné à générer dans celui-ci un couple résistant afin de favoriser la précision et le confort de la conduite du véhicule. Un dispositif de ce type est décrit par exemple dans le document DE-A-195 10 717.

Ce dispositif présente toutefois certains inconvénients parmi lesquels nous noterons tout d'abord l'encombrement axial et le coût relativement élevés en raison de la présence de deux roulements dans le prolongement desquels est disposé un système de frein utilisant un ressort à boudin venant presser une pièce conique de friction dans une cuvette comportant également une surface de friction conique. Le couple de friction développé par un tel dispositif est relativement réduit et l'usure importante du fait des faibles surfaces de friction. En outre, le système de freinage modifie le jeu de fonctionnement des roulements.

On connaît par le document FR-A-2 782 970 un volant de manoeuvre monté sur un roulement instrumenté et auquel est adjoint un système de freinage dont la partie tournante est supportée par la bague intérieure tournante du roulement et vient frotter contre le fond d'un boîtier. Toutefois, dans ce type de dispositif, le roulement n'est pas monté sur un axe et l'encombrement diamétral du roulement et du dispositif est important.

Le document FR A 2 810 088 propose un palier à roulement freiné d'encombrement radial réduit. Le moyen de freinage comprend un empilage axial de disques maintenus en contact de friction par au moins un élément élastique axialement avec au moins un disque angulairement solidaire de la partie non tournante et au moins un disque solidaire de la partie tournante. Le moyen de freinage comprend au moins une rondelle élastique servant à assurer un contact mutuel avec précontrainte axiale des surfaces de friction des disques. Ce palier donne satisfaction dans de nombreuses applications mais présente un encombrement axial relativement important et un nombre élevé de pièces. Il peut, en outre, se produire un léger jeu circonférentiel du fait des tolérances d'ajustement des disques dans leur support, ce jeu circonférentiel étant perceptible par l'opérateur lors du changement de sens de rotation du volant.

L'invention propose de remédier aux inconvénients des dispositifs de l'art antérieur.

L'invention propose un dispositif économique rigide et peu encombrant axialement.

Le dispositif de palier à roulement freiné, selon un aspect de l'invention, est du genre destiné à un volant de commande. Le dispositif comprend une partie extérieure, une partie intérieure, l'une pouvant tourner par rapport à l'autre, non tournante, au moyen d'au moins une rangée d'éléments roulants disposés entre lesdites parties tournante et non tournante. Ledit dispositif comprend, en outre, un moyen de détection des paramètres de rotation et un moyen de freinage de là partie tournante. Le moyen de freinage comprend un organe muni de languettes flexibles venant en appui sur un organe annulaire de friction.

Le dispositif est de faible encombrement axial grâce aux languettes qui occupent un faible espace. Le moyen de freinage et l'organe muni de languettes peuvent être fixés fermement sur leurs supports respectifs, l'un tournant et l'autre non tournant.

Dans un mode de réalisation, les languettes sont flexibles axialement.

Dans un autre mode de réalisation, les languettes sont flexibles radialement.

Dans un mode de réalisation, les languettes sont disposées par paires en opposition. Le couple de freinage est le même dans les deux sens de rotation.

Dans un mode de réalisation, les languettes sont circonférentiellement régulièrement réparties. Ainsi, les languettes ne modifient pas le fonctionnement du roulement.

Dans un mode de réalisation, l'organe muni de languettes est emmanché sur un support de la bague extérieure, par exemple dans l'alésage d'un boîtier.

Dans un autre mode de réalisation, l'organe muni de languettes est emmanché sur un axe solidaire de la bague intérieure.

Dans un mode de réalisation, l'organe muni de languettes comprend une portion d'emmanchement et une portion munie de languettes, l'une axiale et l'autre radiale.

Dans un autre mode de réalisation, l'organe muni de languettes comprend une portion d'emmanchement munie de languettes.

De préférence, l'organe muni de languettes forme un moyen d'étanchéité par passage étroit. Le passage étroit peut être seul ou complété par un joint d'étanchéité.

Dans un mode de réalisation, l'organe annulaire de friction comprend un support et une garniture de friction.

Dans un mode de réalisation, l'organe annulaire de friction comprend un support monté axialement entre une bague de roulement et un épaulement d'un élément solidaire de ladite bague. L'organe de friction peut être serré axialement entre ladite bague et ledit épaulement.

Dans un autre mode de réalisation, l'organe annulaire de friction comprend un support emmanché sur un élément solidaire d'une bague de roulement.

Dans un autre mode de réalisation, l'organe annulaire de friction comprend une garniture de friction supportée directement par un élément solidaire d'une bague de roulement. Le nombre de pièces du dispositif est alors encore plus réduit.

Dans un mode de réalisation, le dispositif comprend un joint d'étanchéité protégeant le moyen de freinage.

Dans un mode de réalisation, le moyen de détection des paramètres de rotation comprend un capteur solidaire de la partie non tournante et un codeur solidaire de la partie tournante.

Dans un mode de réalisation, le moyen de détection des paramètres de rotation comprend un capteur monté dans un couvercle équipé d'une sortie filaire. Le couvercle assure une double fonction de fermeture et de support du capteur.

Dans un mode de réalisation, la bague intérieure du roulement est emmanchée sur un axe de support de volant. Ledit axe peut être pourvu d'un épaulement s'étendant vers l'extérieur.

Dans un mode de réalisation, la bague extérieure du roulement est emmanchée dans un boîtier supportant une partie du moyen de freinage.

Le couvercle peut être fermé sur le fond du boîtier de façon à obturer ledit boîtier du côté opposé au volant.

La bague intérieure peut être tournante et la bague extérieure non tournante ou vice-versa.

Ce dispositif de palier freiné s'adapte et se monte facilement en de nombreux emplacements possibles d'un véhicule ou d'une machine, par exemple sur un tableau de bord, par l'intermédiaire du boîtier formant support. Quelques vis suffisent à la fixation du dispositif par l'intermédiaire du boîtier.

La présente invention sera mieux comprise et d'autres avantageuses apparaîtront à la lecture de la description détaillée de quelques modes de réalisation pris à titre d'exemples nullement limitatifs et illustrés par les dessins annexés, sur lesquels :
- la figure 1 est une vue en coupe axiale d'un dispositif de palier selon un premier mode de réalisation de l'invention;
- la figure 2 est une vue en coupe axiale d'un dispositif de palier selon un second mode de réalisation de l'invention;
- la figure 3 est une vue en coupe axiale d'un dispositif de palier selon un troisième mode de réalisation de l'invention;
- la figure 4 est une vue en coupe axiale d'un dispositif de palier selon un quatrième mode de réalisation de l'invention;
- la figure 5 est une demi vue en coupe axiale d'un organe muni de languettes monté dans le dispositif selon les figures 1 et 2;
- la figure 6 est une vue de face en élévation de l'organe de la figure 5; et
- la figure 7 est une demi vue en coupe axiale d'un organe muni de languettes monté dans le dispositif selon la figure 4.

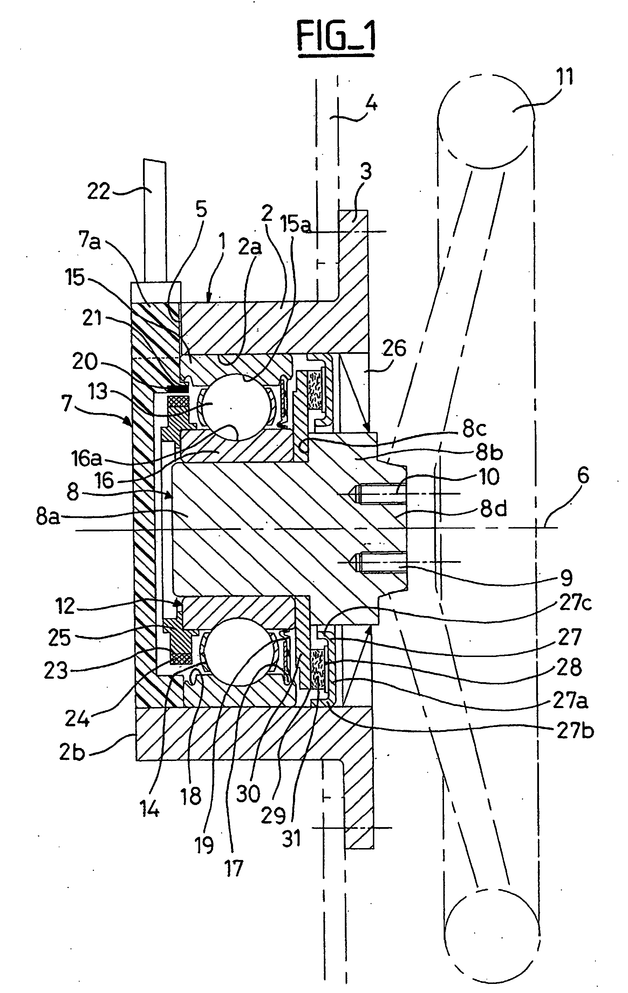

Comme on peut le voir sur les figures 1 à 4, le dispositif de palier à roulement comprend un boîtier extérieur 1, de forme annulaire, à demi-section en L, avec une portion tubulaire 2 et une portion radiale 3 s'étendant vers l'extérieur à une extrémité de la portion tubulaire 2. La portion radiale 3 est pourvue d'une pluralité de trous de fixation aptes à recevoir des vis en vue d'une fixation sur un bâti fixe 4. La portion tubulaire 2 est pourvue d'un alésage 2a et d'une surface radiale d'extrémité 2b située à l'opposé de la portion radiale 3. Une encoche 5 est formée dans la surface radiale d'extrémité 2b. Le boîtier 1 peut être métallique et réalisé en tôle emboutie, en alliage léger moulé ou fritté ou bien encore usiné dans la masse. Il peut être également réalisé en matériau synthétiquement moulé par injection. Le boîtier 1 est centré sur un axe 6.

Un capot 7, par exemple réalisé en matériau synthétique, présentant une forme de disque, ferme l'extrémité libre de la portion tubulaire 2 en venant s'emmancher dans son alésage 2a et en occupant l'encoche 5. Le capot 7 comporte un terminal filaire 7a disposé dans ladite encoche 5.

Le dispositif de palier à roulement comprend également un élément intérieur 8, centré sur l'axe 6, de forme cylindrique massive, présentant une portion de faible diamètre 8a, une portion de grand diamètre 8b, séparées par un épaulement 8c, disposées dans le boîtier 1, et une protubérance 8d en saillie par rapport à la portion radiale 3 du boîtier 1. Une pluralité de trous 9 sont prévus à travers la protubérance 8d pour recevoir des vis 10, par exemple destinées à la fixation d'un volant de manoeuvre 11. L'élément intérieur 8 peut également être réalisé en tôle emboutie et être creux.

Entre le boîtier 1 et l'élément intérieur 8, est disposé un roulement 12 comprenant une rangée d'éléments roulants 13 maintenus par une cage 14 et disposés entre des bagues extérieure 15 et intérieure 16. Toutefois, on pourrait prévoir que les éléments roulants soient directement en contact avec le boîtier 1 et l'élément intérieur 8 par l'intermédiaire de chemins de roulement aménagés sur le boîtier 1 et l'élément intérieur 8.

La bague extérieure 15 est emmanchée dans l'alésage 2a de la portion tubulaire 2 du boîtier 1 et est pourvue d'un chemin de roulement 15a pour les éléments roulants 13. La bague intérieure 16 est emmanchée sur la surface extérieure de la portion de faible diamètre 8a de l'élément intérieur 8 et est pourvue d'un chemin de roulement 16a pour les éléments roulants 13. La bague extérieure 15 est en outre pourvue de deux rainures symétriques 17 et 18 formées sur son alésage, de part et d'autre du chemin de roulement 15a. Dans la rainure 17, est fixé un organe d'étanchéité 19 qui vient frotter contre une portée de la bague intérieure 16 du côté opposé au capot 7. Pour des raisons économiques, il est avantageux que le roulement 12 soit de type standard.

Un capteur 20 est supporté par le capot 7 au moyen d'une portion 21 qui vient s'insérer partiellement a l'intérieur de l'alésage de la bague non tournante 15 sensiblement au niveau de la rainure 18. Le capteur 20 est relié à une unité de traitement, non représentée, par des fils passant dans le terminal filaire 7a et sortant du capot 7 radialement vers l'extérieur par le câble électrique 22. Le capteur 20 peut être du type à effet Hall.

Le moyen de détection se complète par un codeur annulaire 23 supporté par la bague tournante 16. Le codeur 23 qui peut être par exemple de type magnétique comprend une partie active 24 par exemple sous la forme d'un anneau multipolaire et d'une partie de support 25 emmanchée sur une portée externe de la bague intérieure tournante 16 jusqu'à venir en butée contre une surface radiale frontale de ladite bague 16. Le positionnement axial relatif du codeur 23 et du capteur 22 est assuré par l'emmanchement en butée du codeur 23 sur ladite bague 16 et par le support du capteur 20 par le capot 7 lui même monté en contact axial contre la face radiale frontale de la bague non tournante 15.

Une portion du codeur 23 se trouve ainsi entre les bagues 15 et 16 et une portion fait saillie à l'extérieur. La surface cylindrique extérieure du codeur 23 se trouve en regard du capteur 20 avec un léger entrefer.

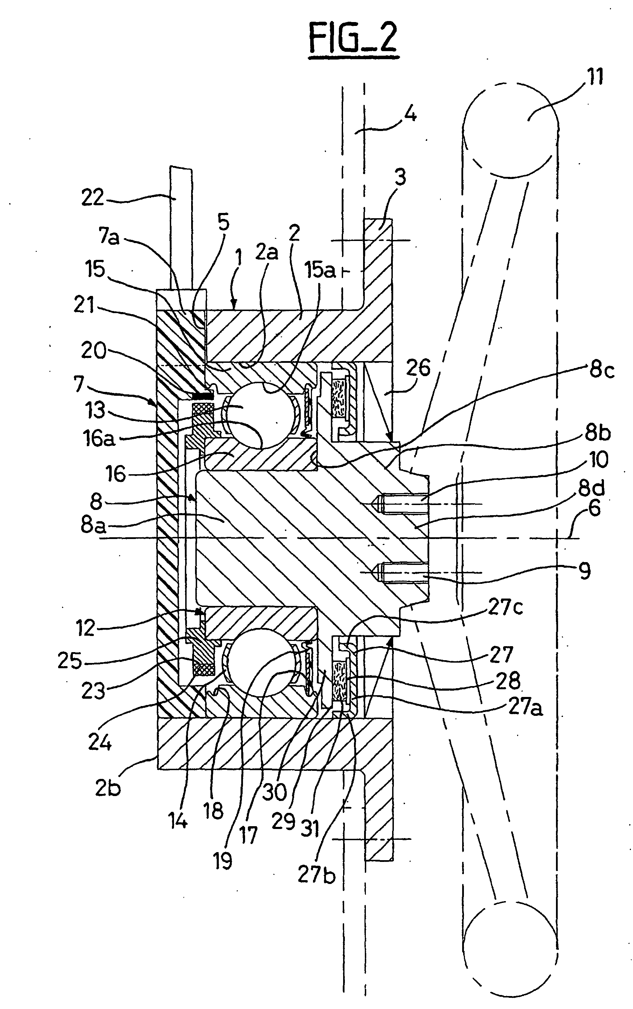

Comme on peut le voir sur les figures 1 et 2, un joint d'étanchéité 26 est disposé entre l'alésage 2a de la portion tubulaire 2 du boîtier 1 du côté du volant 11 et la surface extérieure de la portion de fort diamètre 8b de l'élément intérieur 8.

Le moyen de freinage est disposé axialement entre le roulement 12 et le joint d'étanchéité 26 et radialement entre le boîtier 1 et l'élément intérieur 8.

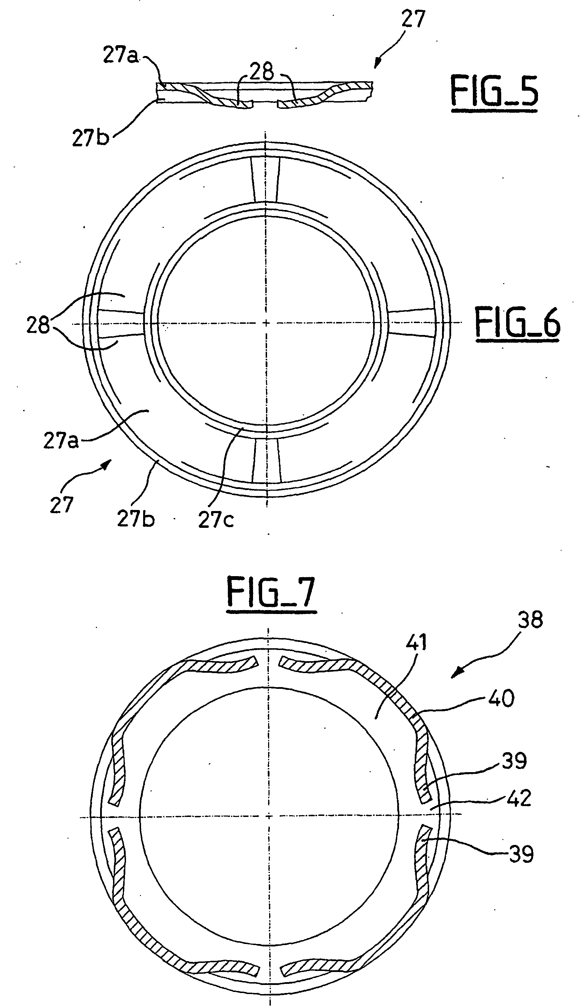

Comme on peut le voir sur la figure 1, le moyen de freinage comprend un organe 27 muni de languettes flexibles 28 et un organe annulaire dé friction 29. L'organe 27, réalisé en tôle emboutie, présente une forme annulaire à section en U avec un fond radial 27a, un rebord extérieur 27b emmanché avec serrage dans l'alésage 2a de la portion tubulaire 2 du boîtier 1, et un rebord intérieur 27c à faible distance radiale de la surface extérieure de la portion de fort diamètre 8b de l'élément intérieur 8. Les extrémités libres des rebords 27b et 27c sont dirigées vers le roulement 12. Une pluralité de languettes 28 sont formées par découpe partielle du fond radial 27a et font saillie axialement entre les rebords 27b et 27c en direction du roulement 12. Les languettes 28 sont ici au nombre de huit, en quatre paires circonférentiellement régulièrement réparties, voir figures 5 et 6. Les extrémités libres des languettes 28 d'une paire se font face, tout en conservant une distance entre elles de façon qu'elles n'interfèrent pas, voir aussi la figure 6.

L'organe annulaire de friction 29 comprend un anneau de support 30 et une garniture de freinage 31 réalisée à partir d'un matériau à fort coefficient de friction avec la surface des languettes 28. L'anneau de support 30 présente la forme d'une rondelle radiale et est serré du côté intérieur entre l'épaulement 8c et la face frontale radiale correspondante de la bague intérieure 16. L'alésage de l'anneau 30 correspond au diamètre extérieur de la portion de faible diamètre 8a de l'élément intérieur 8 empêchant ainsi tout jeu tant radial qu'axial. La garniture de freinage 31 est fixée sur la surface radiale de l'anneau 30 orientée vers le volant 11 du côté extérieur. Les languettes 28 sont en appui sur la garniture de freinage 31.

Le dispositif ainsi obtenu comprend un faible nombre de pièces, le moyen de freinage en comprenant seulement deux, d'où un coût d'approvisionnement et de montage faible. Le jeu circonférentiel du moyen de freinage est inexistant lors des changements de sens de rotation du volant en raison de la fixation rigide de l'organe annulaire de friction 29 et de l'organe 27. L'encombrement radial du moyen de freinage est similaire à celui du roulement. L'encombrement axial du moyen de freinage est très faible, nettement inférieur à celui du roulement. Le contact direct entre les languettes et la garniture de freinage autorise une réduction de l'encombrement et du nombre de pièces.

Le couple de freinage est déterminé par la raideur et le degré de flexion des languettes. La disposition par paire en opposition des languettes, symétriquement par rapport à un rayon, permet de conserver un couple rigoureusement constant dans les deux sens de rotation.

Dans le mode de réalisation illustré sur la figure 2, le dispositif est similaire à celui illustré sur la figure 1, à ceci près que l'anneau de support 30 de l'organe annulaire de friction 29 est monobloc avec l'élément intérieur 8, en étant formé entre la portion de faible diamètre 8a sur laquelle est emmanchée la bague intérieure 16 du roulement 12 et la portion de fort diamètre 8b.

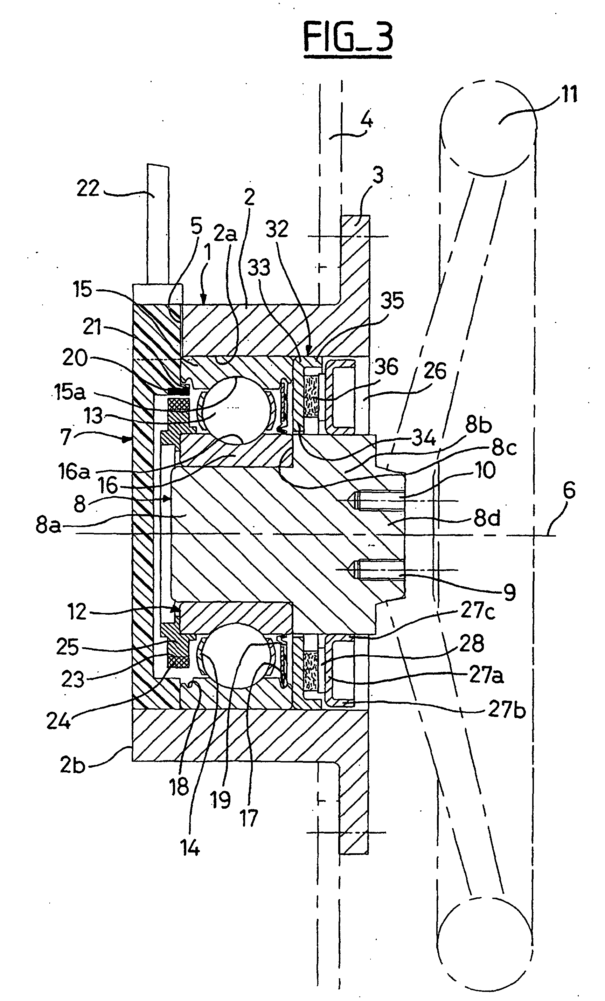

Dans le mode de réalisation illustré sur la figure 3, le dispositif est similaire à celui illustré sur la figure 1, à ceci près que la bague intérieure 16 du roulement 12 vient en contact par sa face frontale radiale orientée du côté du volant 11 contre l'épaulement 8c de l'élément intérieur 8. L'organe 27 muni de languettes flexibles 28 est pourvu de rebords 27b et 27c dirigés à l'opposé du roulement 12 vers le volant 11, les languettes 28 faisant saillie à l'opposé desdits rebords 27b et 27c. Il n'est pas prévu de joint d'étanchéité supplémentaire dans l'espace subsistant entre l'organe 27 et la face radiale d'extrémité du boîtier 1 en direction du volant 11.

L'organe annulaire de friction 32 comprend une coupelle de support 33 pourvue d'une portion radiale 34 et d'un rebord axial 35, et une garniture d'étanchéité 36. Le rebord axial 35 est emmanché dans l'alésage 2a de la portion tubulaire 2 du boîtier 1. La portion radiale 34 est dirigée vers l'intérieur à partir du rebord axial 35, son extrémité libre étant disposée à faible distance de la surface cylindrique extérieure de la portion de fort diamètre 8b de l'élément intérieur 8. La portion radiale 34 est en contact avec la surface frontale radiale de la bague extérieure 15 du roulement 12, du côté opposé au capot 7. La garniture d'étanchéité 36 est fixée par exemple par collage ou par surmoulage sur la portion radiale 34, du côté opposé au roulement 12, et donc du côté des languettes 28 dé l'organe 27. La garniture d'étanchéité 36 est positionnée radialement sensiblement à mi-distance entre l'alésage 2a de la portion tubulaire 2 du boîtier 1 et la surface extérieure cylindrique de la portion de fort diamètre 8b de l'élément intérieur 8 afin d'éviter une interférence entre les languettes 28 et le rebord axial 35.

L'organe annulaire de friction 32 est là encore un élément de forme simple, de fabrication économique, le support pouvant être fabriqué à partir d'une pièce de tôle. Le moyen de freinage consiste seulement en deux éléments de fabrication économique et de compacité axiale et radiale satisfaisante.

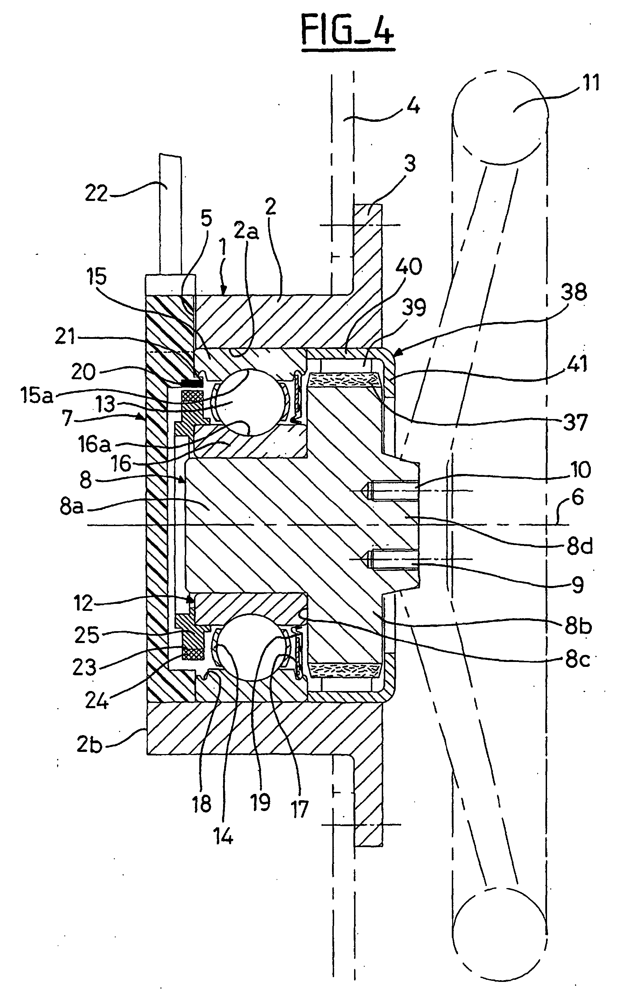

Dans le mode de réalisation illustré sur la figure 4, la garniture d'étanchéité 37 est fixée directement sur la surface extérieure cylindrique de la portion de fort diamètre 8b de l'élément intérieur 8. Dans ce cas, on peut prévoir que ladite portion de fort diamètre 8b présente un diamètre extérieur non plus sensiblement égal à celui de la bague intérieure 16 du roulement 12, comme dans les modes de réalisation précédents, ce qui permettait de conserver un espace radial suffisant pour y disposer le moyen de freinage. La portion de fort diamètre 8b s'étend ici radialement entre les bagues intérieure 16 et extérieure 15 jusqu'à proximité de l'alésage de la bague extérieure 15. La garniture d'étanchéité 37 est formée sur toute la longueur axiale de la portion de fort diamètre 8b et s'étend radialement vers l'extérieur sur une épaisseur de quelques millimètres.

Le moyen de freinage se complète par un organe 38 muni de languettes 39. L'organe 38 présente une forme de coupelle à section en L avec une portion axiale 40 emmanchée dans l'alésage 2a de la portion tubulaire 2 du boîtier 1 avec son extrémité libre en contact avec la surface radiale frontale de la bague extérieure 15 du roulement 12, du côté opposé au capot 7, et une portion radiale 41 disposée à l'extrémité de la portion axiale 40 opposée au roulement 12 et s'étendant radialement vers l'intérieur en venant recouvrir sur une faible distance la portion de fort diamètre 8b de l'élément intérieur 8 pour former avec cette dernière une étanchéité par passage étroit. Les languettes 39 sont formées par découpe partielle dans la portion axiale 40 et s'étendent radialement vers l'intérieur jusqu'à venir en contact avec la garniture d'étanchéité 37. Le contact est prévu avec une certaine précontrainte dont la valeur détermine le couple frottant ainsi créé.

En d'autres termes, l'organe 38 assure à la fois une fonction d'étanchéité et fournit une surface de frottement pour la garniture. La garniture d'étanchéité 37 étant supportée par l'élément intérieur, le nombre de pièces indépendantes du moyen de freinage se limite au seul organe 38. Ce mode de réalisation est particulièrement compact radialement, en ce sens que le moyen de freinage occupe un espace radial extrêmement réduit, largement inférieur à celui occupé par le roulement 12.

La disposition géométrique des languettes 39, voir la figure 7, se rapproche des autres modes de réalisation, en ce sens que les languettes 39 sont circonférentiellement régulièrement réparties en plusieurs paires de languettes, ici quatre paires de languettes dont les extrémités libres se font face pour assurer un couple constant dans les deux sens de rotation et une usure régulière de la garniture d'étanchéité ainsi qu'une précontrainte radiale régulièrement répartie.

Avantageusement, les extrémités libres des languettes 39 d'une paire de languettes se faisant face sont séparées par un espace 42 qui évite qu'elles n'interfèrent mutuellement. En outre, les extrémités libres des languettes 39 sont légèrement recourbées vers l'extérieur, contrairement à la forme générale desdites languettes afin d'éviter un grippage entre lesdites extrémités libres des languettes 39 et la surface extérieure de la garniture d'étanchéité 37. Les languettes 39 offrent ainsi une surface convexe arrondie de frottement avec la garniture d'étanchéité 37.

Dans ce dernier mode de réalisation, le couple de frottement est obtenu par construction. La position axiale de l'organe 38 à languettes 39 n'influe pas sur le couple de frottement. On remarquera également que l'action radiale des languettes 39 ne provoque pas de mise en précontrainte axiale interne du roulement 12.

De façon générale, le dispositif selon l'invention offre une grande stabilité du couple quel que soit le sens de rotation, une absence de jeu dans le sens circonférentiel lors d'un changement de sens de rotation du volant, un assemblage extrêmement simple avec une ou deux pièces à monter par simple emmanchement sur les pièces environnantes et une grande compacité axiale et radiale grâce au faible nombre de pièces et à leur forme simple. La conception modulaire du moyen de freinage rend aisée la modification du couple de frottement par changement de l'organe à languettes, ceci pouvant se faire sans variation de l'encombrement axial du dispositif grâce à la faible épaisseur des composants.

## Revendications

1. Dispositif de palier à roulement freiné, du genre pour volant de commande, comprenant une partie extérieure (1) et une partie intérieure (8), l'une pouvant tourner par rapport à l'autre, non tournante, au moyen d'au moins une rangée d'éléments roulants (13) disposés entre lesdites parties tournante et non tournante, ledit dispositif comprenant, en outre, un moyen de détection des paramètres de rotation et un moyen de freinage de la partie tournante, **caractérisé par le fait que** le moyen de freinage comprend au moins un organe (27) muni de languettes flexibles (28) venant en appui sur un organe annulaire de friction (29).

2. Dispositif selon la revendication 1, **caractérisé par le fait que** les languettes (28) sont flexibles axialement.

3. Dispositif selon la revendication 1, **caractérisé par le fait que** les languettes (39) sont flexibles radialement.

4. Dispositif selon l'une quelconque des revendications précédentes, **caractérisé par le fait que** les languettes sont disposées par paires en opposition.

5. Dispositif selon l'une quelconque des revendications précédentes, **caractérisé par le fait que** les languettes sont circonférentiellement régulièrement réparties.

6. Dispositif selon l'une quelconque des revendications précédentes, **caractérisé par le fait que** l'organe (27) muni de languettes est emmanché sur un support (1) de la bague extérieure (15).

7. Dispositif selon l'une quelconque des revendications 1 à 5, **caractérisé par le fait que** l'organe (27) muni de languettes est emmanché sur un axe (8) solidaire de la bague intérieure (16).

8. Dispositif selon l'une quelconque des revendications précédentes, **caractérisé par le fait que** l'organe (27) muni de languettes comprend une portion d'emmanchement (27b) et une portion (27a) munie de languettes, l'une axiale et l'autre radiale.

9. Dispositif selon l'une quelconque des revendications 1 à 7, **caractérisé par le fait que** l'organe (38) muni de languettes comprend une portion d'emmanchement (40) munie de languettes (39).

10. Dispositif selon l'une quelconque des revendications précédentes, **caractérisé par le fait que** l'organe (38) muni de languettes forme un moyen d'étanchéité par passage étroit.

11. Dispositif selon l'une quelconque des revendications précédentes, **caractérisé par le fait que** l'organe annulaire de friction (29) comprend un support (30) et une garniture de friction (31).

12. Dispositif selon l'une quelconque des revendications précédentes, **caractérisé par le fait que** l'organe annulaire de friction (29) comprend un support (30) monté axialement entre une bague de roulement (16) et un épaulement (8c) d'un élément solidaire (8) de ladite bague.

13. Dispositif selon l'une quelconque des revendications précédentes, **caractérisé par le fait que** l'organe annulaire de friction (32) comprend un support (33) emmanché sur un élément solidaire (1) d'une bague de roulement (15).

14. Dispositif selon l'une quelconque des revendications 1 à 10, **caractérisé par le fait que** l'organe annulaire de friction comprend une garniture de friction (31) supportée directement par un élément (8) solidaire d'une bague de roulement (16).

15. Dispositif selon l'une quelconque des revendications précédentes, **caractérisé par le fait qu'**il comprend un joint d'étanchéité (26) protégeant le moyen de freinage.

16. Dispositif selon l'une quelconque des revendications précédentes, **caractérisé par le fait que** le moyen de détection des paramètres de rotation comprend un capteur (20) solidaire de la partie non tournante et un codeur (23) solidaire de la partie tournante.

17. Dispositif selon l'une quelconque des revendications précédentes, **caractérisé par le fait que** le moyen de détection des paramètres de rotation comprend un capteur (20) monté dans un couvercle (7) équipé d'une sortie filaire.

18. Dispositif selon l'une quelconque des revendications précédentes, **caractérisé par le fait que** la bague intérieure (16) du roulement est emmanchée sur un axe (8) de support de volant (11).

19. Dispositif selon la revendication 18, **caractérisé par le fait que** ledit axe (8) est pourvu d'un épaulement (8c) s'étendant vers l'extérieur.

20. Dispositif selon l'une quelconque des revendications précédentes, **caractérisé par le fait que** la bague extérieure (15) du roulement est emmanchée dans un boîtier (1) supportant une partie du moyen de freinage.

21. Dispositif selon l'une quelconque des revendications précédentes, **caractérisé par le fait que** le couvercle est fixé sur le fond du boîtier (1) de façon à obturer ledit boîtier du côté opposé au volant (11).

## Patentansprüche

1. Wälzlagervorrichtung mit Bremseinrichtung von der Art für ein Steuerrad, die ein äußeres Teil (1) und ein inneres Teil (8) aufweist, von denen das eine in Bezug auf das andere, stillstehende Teil mittels wenigstens einer Reihe von Wälzkörpern (13) umlaufen kann, die zwischen dem umlaufenden Teil und dem stillstehenden Teil angeordnet sind, wobei die Vorrichtung ferner ein Mittel zur Erfassung von Rotationsparametern sowie ein Mittel zur Abbremsung des umlaufenden Teils aufweist, **dadurch gekennzeichnet, dass** das Bremsmittel wenigstens ein Element (27) aufweist, das mit flexiblen Zungen (38) versehen ist, die mit einem ringförmigen Reibelement (29) in Anlage kommen.

2. Vorrichtung nach Anspruch 1, **dadurch gekennzeichnet, dass** die Zungen (28) in Axialrichtung nachgiebig sind.

3. Vorrichtung nach Anspruch 1, **dadurch gekennzeichnet, dass** die Zungen (39) in Radialrichtung nachgiebig sind.

4. Vorrichtung nach einem beliebigen der vorhergehenden Ansprüche, **dadurch gekennzeichnet, dass** die Zungen paarweise einander gegenüberliegend angeordnet sind.

5. Vorrichtung nach einem beliebigen der vorhergehenden Ansprüche, **dadurch gekennzeichnet, dass** die Zungen in Umfangsrichtung gleichmäßig verteilt angeordnet sind.

6. Vorrichtung nach einem beliebigen der vorhergehenden Ansprüche, **dadurch gekennzeichnet, dass** das mit Zungen versehene Element (27) auf einem Träger (1) des Außenrings (15) aufgesteckt ist.

7. Vorrichtung nach einem beliebigen der Ansprüche 1 bis 5, **dadurch gekennzeichnet, dass** das mit Zungen versehene Element (27) auf einer mit dem Innenring (16) fest verbundenen Achse (8) aufgesteckt ist.

8. Vorrichtung nach einem beliebigen der vorhergehenden Ansprüche, **dadurch gekennzeichnet, dass** das mit Zungen versehene Element (27) einen Aufsteckabschnitt (27b) sowie einen mit Zungen versehenen Abschnitt (27a) aufweist, von denen der eine in Axialrichtung und der andere in Radialrichtung verläuft.

9. Vorrichtung nach einem beliebigen der Ansprüche 1 bis 7, **dadurch gekennzeichnet, dass** das mit Zungen versehene Element (38) einen Aufsteckabschnitt (40) aufweist, der mit Zungen (39) versehen ist.

10. Vorrichtung nach einem beliebigen der vorhergehenden Ansprüche, **dadurch gekennzeichnet, dass** das mit Zungen versehene Element (38) ein Dichtungsmittel mittels eines engen Durchlasses bildet.

11. Vorrichtung nach einem beliebigen der vorhergehenden Ansprüche, **dadurch gekennzeichnet, dass** das ringförmige Reibelement (29) einen Träger (30) und einen Reibbelag (31) aufweist.

12. Vorrichtung nach einem beliebigen der vorhergehenden Ansprüche, **dadurch gekennzeichnet, dass** das ringförmige Reibelement (29) einen Träger (30) aufweist, der in Axialrichtung zwischen einem Lagerring (16) und einer Schulter (8c) eines mit dem Ring fest verbundenen Elementes (8) montiert ist.

13. Vorrichtung nach einem beliebigen der vorhergehenden Ansprüche, **dadurch gekennzeichnet, dass** das ringförmige Reibelement (32) einen Träger (33) aufweist, der auf einem mit einem Lagerring (15) fest verbundenen Element (1) aufgesteckt ist.

14. Vorrichtung nach einem beliebigen der Ansprüche 1 bis 10, **dadurch gekennzeichnet, dass** das ringförmige Reibelement einen Reibbelag (31) aufweist, der unmittelbar von einem mit einem Lagerring (16) fest verbundenen Element (8) getragen ist.

15. Vorrichtung nach einem beliebigen der vorhergehenden Ansprüche, **dadurch gekennzeichnet, dass** sie eine Dichtung (26) aufweist, die das Bremsmittel schützt.

16. Vorrichtung nach einem beliebigen der vorhergehenden Ansprüche, **dadurch gekennzeichnet, dass** das Mittel zur Erfassung von Rotationsparametern einen Signalaufnehmer (20), der mit dem stillstehenden Teil fest verbunden ist, sowie einen Signalgeber (23) aufweist, der mit dem umlaufenden Teil fest verbunden ist.

17. Vorrichtung nach einem beliebigen der vorhergehenden Ansprüche, **dadurch gekennzeichnet, dass** das Mittel zur Erfassung von Rotationsparametern einen Signalaufnehmer (20) aufweist, der in einem Deckel (7) eingebaut ist, der mit einem Drahtausgang versehen ist.

18. Vorrichtung nach einem beliebigen der vorhergehenden Ansprüche, **dadurch gekennzeichnet, dass** der Innenring (16) des Wälzlagers auf einer Trägerachse (8) für das Rad (11) aufgesteckt ist.

19. Vorrichtung nach Anspruch 18, **dadurch gekennzeichnet, dass** die Achse (8) mit einer Schulter (8c) versehen ist, die nach außen verläuft.

20. Vorrichtung nach einem beliebigen der vorhergehenden Ansprüche, **dadurch gekennzeichnet, dass** der Außenring (15) des Wälzlagers in einem Gehäuse (1) eingesteckt ist, das einen Teil des Bremsmittels stützt.

21. Vorrichtung nach einem beliebigen der vorhergehenden Ansprüche, **dadurch gekennzeichnet, dass** der Deckel an der Rückwand des Gehäuses (1) in einer Weise fixiert ist, um das Gehäuse auf der von dem Rad (11) abgewandten Seite zu verschließen.

## Claims

1. Braked rolling bearing device of the kind for a control wheel, comprising an outer part (1) and an inner part (8), one being able to rotate with respect to the other, which does not rotate, by means of at least one row of rolling elements (13) arranged between the said rotating and non-rotating parts, the said device further comprising a means for detecting rotation parameters and a means for braking the rotating part, **characterized in that** the braking means comprises at least one component (27) equipped with flexible tabs (28) bearing against an annular friction member (29).

2. Device according to Claim 1, **characterized in that** the tabs (28) are axially flexible.

3. Device according to Claim 1, **characterized in that** the tabs (39) are radially flexible.

4. Device according to any one of the preceding claims, **characterized in that** the tabs are arranged in opposing pairs.

5. Device according to any one of the preceding claims, **characterized in that** the tabs are uniformly distributed about the circumference.

6. Device according to any one of the preceding claims, **characterized in that** the member (27) equipped with tabs is push-fitted onto a support (1) of the outer ring (15).

7. Device according to any one of Claims 1 to 5, **characterized in that** the member (27) equipped with tabs is push-fitted onto a shaft (8) secured to the inner ring (16).

8. Device according to any one of the preceding claims, **characterized in that** the member (27) equipped with tabs comprises a push-fit portion (27b) and a portion (27a) equipped with tabs, one of the portions being axial and the other radial.

9. Device according to any one of Claims 1 to 7, **characterized in that** the member (38) equipped with tabs comprises a push-fit portion (40) equipped with tabs (39).

10. Device according to any one of the preceding claims, **characterized in that** the member (38) equipped with tabs forms a sealing means by way of a narrow passage.

11. Device according to any one of the preceding claims, **characterized in that** the annular friction member (29) comprises a support (30) and a friction lining (31).

12. Device according to any one of the preceding claims, **characterized in that** the annular friction member (29) comprises a support (30) mounted axially between a bearing ring (16) and a shoulder (8c) of an element (8) secured to the said ring.

13. Device according to any one of the preceding claims, **characterized in that** the annular friction member (32) comprises a support (33) push-fitted onto an element (1) secured to a bearing ring (15).

14. Device according to any one of Claims 1 to 10, **characterized in that** the annular friction member comprises a friction lining (31) supported directly by an element (8) secured to a bearing ring (16).

15. Device according to any one of the preceding claims, **characterized in that** it comprises a seal (26) protecting the braking means.

16. Device according to any one of the preceding claims, **characterized in that** the means for detecting rotation parameters comprises a sensor (20) secured to the non-rotating part and an encoder (23) secured to the rotating part.

17. Device according to any one of the preceding claims, **characterized in that** the means for detecting the rotation parameters comprises a sensor (20) mounted in a cover (7) equipped with a wire outlet.

18. Device according to any one of the preceding claims, **characterized in that** the inner ring (16) of the bearing is push-fitted onto a shaft (8) supporting the wheel (11).

19. Device according to Claim 18, **characterized in that** the said shaft (8) is provided with a shoulder (8c) extending outwards.

20. Device according to any one of the preceding claims, **characterized in that** the outer ring (15) of the bearing is push-fitted into a casing (1) supporting part of the braking means.

21. Device according to any one of the preceding claims, **characterized in that** the cover is fixed onto the end of the casing (1) so as to close off the said casing on the opposite side to the wheel (11).
